# EUROPÄISCHE PATENTSCHRIFT

(11) **EP 0 556 704 B1**
(45) Veröffentlichungstag und Bekanntmachung des Hinweises auf die Patenterteilung: **16.08.1995**
(21) Anmeldenummer: 93102072.1
(22) Anmeldetag: 10.02.1993
(51) Int. Cl.: F16F 13/00

(54) **Hydraulisch dämfendes Zweikammer-Motorlager**
Hydraulically-damped, two-chamber engine mount
Support de moteur, à amortissement hydraulique avec deux chambres

(30) Priorität: 21.02.1992 DE 4205355
(43) Veröffentlichungstag der Anmeldung: 25.08.1993
(73) Patentinhaber: METZELER GIMETALL AG, D-80992 München (DE)
(72) Erfinder: Härtel, Volker, Dr., W-8034 Germering (DE); Hofmann, Manfred, Dipl.-Ing., W-6257 Hünfelden 1 (DE)
(74) Vertreter: Preissner, Nicolaus, Dipl.-Ing.

(56) Entgegenhaltungen:
- EP-A- 0 036 470
- EP-A- 0 133 588

## Beschreibung

Die Erfindung bezieht sich auf ein hydraulisch dämpfendes Zweikammer-Motorlager, dessen mit Flüssigkeit gefüllte und gummielastische Umfangswände aufweisende Kammern über einen, in einer starren Zwischenplatte angeordneten Kanal miteinander in Verbindung stehen und in dessen Zwischenplatte eine stirnseitig zumindest zentral offene Kammer eingelassen ist, in der eine beiderseits von Flüssigkeit beaufschlagte und parallel zur Richtung eingeleiteter Schwingungen bewegliche Membranplatte eingespannt ist.

Die Membranplatte als sogenannte Entkopplungsmembran hat in Hydrolagern die Aufgabe, die eingeleiteten Schwingungen geringer Amplitude hydraulisch zu "entkoppeln", d.h. den hydraulischen Überströmkanal nicht wirksam werden zu lassen. Damit ist das Lager für Schwingungen kleiner Amplitude weich, so daß der durch die hydraulische Dämpfung hervorgerufene zusätzliche Verformungswiderstand nicht zum Tragen kommt. Erst wenn die Membran am Anschlag ist, strömt auch Flüssigkeit durch den Überströmkanal und bewirkt Dämpfung und eine erhöhte Steifigkeit.

Solche Membranen müssen demnach leicht beweglich sein, sie sollen sich nicht schlagartig an die Käfigwand anlegen, sondern mit einer progressiven Kennung versehen sein und müssen hinreichend flüssigkeitsdicht sein, so daß sie nicht einen Bypass für den Hauptkanal des Lagers bilden. Daher bereitet die Lagerung und Einspannung der Membranplatte dem Konstrukteur ein besonderes Problem.

Bei einem hydraulisch gedämpften Motorlager ohne Entkopplungsmembran stellt sich bei geschlossenem Kanal das Druck/Volumen-Diagramm bei Einfederung praktisch als Gerade mit konstanter Steigung dar. Bei einem Lager mit einer losen Entkopplungsmembran verläuft diese pV-Kennlinie bei einer geringen Einfederung zunächst nahezu horizontal, bis der Freiweg der Membran durchmessen ist und die Membranplatte an der gegenüberliegenden Käfigwand anschlägt.

Von diesem Punkt an hat das Lager wieder seine ursprüngliche Volumensteifigkeit, wie sie sich ohne Entkopplungsmembran ergibt. Ein Lager mit einer solchen frei beweglichen Membranplatte, wie sie beispielsweise in der DE 27 27 244 A1 beschrieben ist, bietet zwar eine optimale Entkopplung für kleine Amplituden, hat aber den großen Nachteil, daß sie bei größeren Amplituden durch Anschlagen an ihre Begrenzungsflächen Geräusche verursacht, die sich als störendes Klappern oder Klopfen äußern.

Es ist daher versucht worden, diese Anschlaggeräusche dadurch zu unterbinden, daß die Membranplatte zwischen 2 Gummiringen am äußeren Umfang auf der Ober- und Unterseite eingespannt ist, wie ebenfalls in der DE 27 27 244 A1 beschrieben.

Eine solche elastische Membranlagerung über druckbeaufschlagte Gummielemente hat aber erhebliche herstellungstechnische Schwierigkeiten für das Lager. Darüberhinaus ist die Entkopplungsfunktion, die ja für kleine Amplituden einer sehr weichen Membranaufhängung (Steifigkeit nahezu 0) bedarf, nur schwer reproduzierbar einzustellen.

Berücksichtigt man nämlich die üblichen Maße der Membranplatte (etwa 1,5 - 2,5 mm dick) und des Membrankäfigs von etwa 5 - 6 mm Höhe, so ist daraus ersichtlich, daß sowohl die progressiv wirkenden Druckanschläge als auch der Membrankäfig für eine einwandfreie Funktion des Systems mit außerordentlich geringen Toleranzen hergestellt werden müssen, da schon Abweichungen von 1/10 bis 2/10 mm die Membranplatte entweder zum Klappern bringen oder so stramm verspannen, daß eine hinreichend freie Bewegung der Membranplatte über typische Wege von 2/10 bis 3/10 mm und damit die gewünschte hydraulische Entkopplung nicht mehr gegeben ist.

Eine für die Entkopplung bessere Lösung, die weniger abhängig von Fertigungstoleranzen ist, bietet die Membranlagerung mit Schubelementen, wie sie beispielsweise in der DE 37 31 524 A1 beschrieben ist.

Dabei ist die weitgehend starre Membranplatte am äußeren Umfang über einen dünnen, horizontal umlaufenden, konzentrischen Steg aus Gummi mit einem torusförmigen Gummiring verbunden, dessen Durchmesser geringfügig größer als die freie Höhe der Membrankammer ist, in die dieser Gummiring dann eingespannt wird.

Eine solche Anordnung ist flüssigkeitsdicht und erlaubt eine sehr weiche Lagerung der Membranplatte, erfordert dann aber sehr dünne und daher mechanisch wenig widerstandsfähige Gummischichten für das Schubelement. Zudem bedarf eine solche Anordnung noch zusätzlicher, weich einsetzender, progressiver Anschläge, damit die Entkopplung nur für Schwingungen kleiner Amplituden wirkt.

Bei diesem Membrantyp ergeben sich oft Probleme mit der dynamischen Dauerfestigkeit, da wegen der auftretenden Durckdifferenzen im Lager, die für große Amplituden zwischen + 3 bar und - 1 bar schwanken können, starke Spannungsspitzen im schub-belasteten Übergangsbereich des Elementes entstehen, was leicht zum Einreißen oder Abscheren führt.

Ausgehend von dem eingangs genannten Stand der Technik und der geschilderten Problematik liegt der vorliegenden Erfindung die Aufgabe zugrunde, ein hydraulisch dämpfendes Zweikammer-Motorlager zu schaffen, dessen Membranplatte leicht beweglich ist, nicht klappert und sich progressiv an ihre Begrenzungsflächen anlegt, d.h. ein Hydrolager, das einen weichen Übergang der pV-Kennlinie von nahezu horizontal verlaufendem Bereich zum schräg ansteigendem Bereich aufweist.

Zur Lösung dieser Aufgabe ist erfindungsgemäß vorgesehen, daß die zumindest im radial außenliegenden Bereich starre Membranplatte einen geringeren Außendurchmesser als den Innendurchmesser der Membrankammer aufweist und daß die Membranplatte am Außenumfang mit schräg nach oben und unten gerichteten, ringförmigen Ansätzen aus gummielastischem Material versehen ist, über die die Membranplatte flüssigkeitsdicht und elastisch nachgiebig in der Membrankammer eingespannt ist.

Mit einer solchen Halterung in Form von etwa fischschwanzähnlichen Ansätzen ist eine Einspannung geschaffen, die bei einer vertikalen Bewegung der Membranplatte nur auf Biegung beansprucht ist und die, je nach Dicke und Neigungswinkel dieser Ansätze, eine mehr oder weniger starke Progressivität beim Anlegen der Membranplatte an ihre Begrenzungsflächen bzw. für die Begrenzung ihres Freiweges aufweist, wodurch ein mehr oder weniger sanfter Übergang des Kennlinienknickes erreicht werden kann.

Diese Ansätze können dabei schräg-radial nach außen oder nach innen gerichtet angeordnet sein.

Die Membranplatte kann ferner über ihren gesamten Durchmesser aus einem starren Material bestehen, wobei die schräg-radialen Ansätze einstückig in einem Vulkanisationsprozess an die Membranplatte angeformt sein können.

Es ist dabei auch möglich, daß die Membranplatte aus gummielastischem Material mit einer ringplattenförmigen Einlage aus starrem Material im an den Außenumfang angrenzenden Bereich besteht und die schräg-radialen Ansätze unmittelbar einstückig an das gummielastische Material der Membranplatte angeformt sind.

Zur zusätzlichen Anschlagbegrenzung ist es dabei möglich, daß die Membranplatte radial innenliegend zu den schräg-radialen Ansätzen auf Ober- und Unterseite je eine wulstförmige, umlaufende Erhebung oder aber mindestens drei noppenförmige Erhebungen als Anschlag aufweist.

Es ist aber auch möglich, daß sich die starre Membranplatte radial bis in den Bereich zwischen den schrägradialen Ansätzen erstreckt und hier selbst als Anschlag wirkt.

Anhand einer schematischen Zeichnung sind Aufbau und Funktionsweise von Ausführungsbeispielen nach der Erfindung näher erläutert. Dabei zeigen:
- Fig. 1: einen Längsschnitt durch das Grundprinzip eines solchen hydraulisch dämpfenden Zweikammer-Motorlagers,
- Fig. 2: die Membranplatte des Lagers nach Figur 1 in vergrößerter Darstellung,
- Fig. 3: eine Membranplatte mit integrierten Ansätzen und einem zusätzlichen Druckanschlag,
- Fig. 4: eine Membranplatte mit integriertem Anschlag und
- Fig. 5: eine Membranplatte mit schräg-radial nach innen gerichteten Ansätzen.

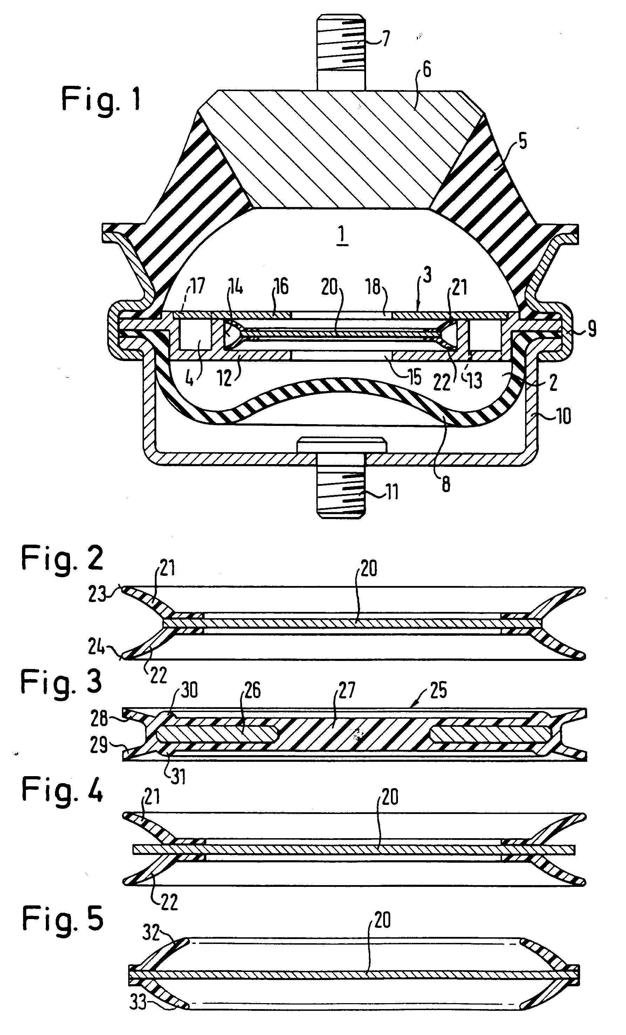

Wie man aus Figur 1 ersieht, weist das Zweikammer-Motorlager zunächst in herkömmlicher Weise eine obere, motorseitige Kammer 1 und eine untere Ausgleichskammer 2 auf, die über einen in einer Zwischenplatte 3 verlaufenden Kanal 4 miteinander in Verbindung stehen. Die obere Kammer 1 wird von einer starkwandigen, hohlkegelförmigen Kammerwandung 5, der sog. Tragfeder, begrenzt, die an der oberen Stirnseite eine Lagerplatte 6 mit einem Bolzen 7 zur Festlegung am nicht näher dargestellten Motor aufweist. Die untere Kammer 2 ist von einer beispielsweise tassenförmigen Kammerwandung 8 aus ebenfalls gummielastischem, jedoch volumennachgiebigerem Material als das der Kammerwandung 5 gebildet, da die Kammer 2 praktisch nur als Ausgleichskammer fungiert. Alle Lagerteile sind über einen umlaufenden Ringflansch 9 flüssigkeitsdicht miteinander verspannt, wobei der Ringflansch 9 gleichzeitig den unteren Gehäusedeckel 10 mit einem Anschlußbolzen 11 zur Festlegung des Lagers an die Fahrzeugkarosserie mit erfaßt.
Nach dem dargestellten Ausführungsbeispiel besteht die Zwischenplatte 3 aus einer Bodenplatte 12, in die der ringförmige Verbindungskanal 4 mit einer gestrichelt angedeuteten Durchtrittsöffnung 13 zur Unterseite eingeschnitten ist. Ferner weist die Bodenplatte 12 eine zentrale, zylindrische Ausnehmung 14 auf, deren Unterseite mit einer zentralen Öffnung 15 oder entsprechenden Durchbrüchen versehen ist. Die in die Bodenplatte 12 eingeschnittenen Ausnehmungen 4 und 14 können dann durch eine zentrisch aufgesetzte Deckplatte 16 verschlossen sein, wobei diese Deckplatte 16 eine gestrichelt angedeutete Öffnung 17 als Verbindung vom Ringkanal 4 zur oberen Kammer 1 und eine zentrale Öffnung 18 oberhalb der Membrankammer 14 aufweist.

In die somit durch die Ausnehmung 14 gebildete Kammer ist nunmehr eine kreiszylindrische Membranplatte 20 eingesetzt, die im vergrößerten Maßstab anhand Figur 2 im einzelnen erläutert wird.

Die Membranplatte 20 besteht aus starrem Material, wie z.B. Aluminium oder Kunststoff und weist einen geringeren Außendurchmesser als den Innendurchmesser der Membrankammer 14 auf. Am Außenumfang ist diese Membranplatte 20 mit schräg-radial nach außen ragenden Ansätzen aus elastischem Material versehen, die praktisch als gesonderte Ringe ausgebildet sind und am Außenumfang auf Ober- und Unterseite der Membranplatte aufgesetzt sind. Es ist aber auch möglich, daß diese Ansätze 21 und 22 einstückig in einem Vulkanisationsprozesse an die metallische Membranplatte 20 angeformt sind. Die äußeren Kanten 23 und 24 dieser Ansätze 21 und 22 weisen im nichteingespannten Zustand einen größeren Abstand voneinander auf, als die freie Höhe der Membrankammer 14 beträgt. Dadurch wird die Membranplatte 20 dann mit geringer Vorspannung in die Membrankammer 14 eingesetzt und durch die Deckplatte 16 arretiert.

Bei über die Lagerplatte 6 in die obere Flüssigkeitskammer 1 eingeleiteten Schwingungen wird somit die Membranplatte 20 zunächst diesen Schwingungen zu folgen versuchen, da sie durch die dünnen Ansätze 21 und 22 zunächst in ihrer Beweglichkeit im mittleren Bereich nur wenig gehemmt ist. Erst bei größeren Ausschlägen und einer Annäherung an die untere bzw. obere Begrenzungsfläche der Membrankammer 14 werden sich die Ansätze 21 bzw. 22 versteifen und die Bewegungsmöglichkeit der Membranplatte 20 progressiv begrenzen.

Zur Einstellung einer gewünschten Progressivität der Anlage der Membranplatte an ihre Begrenzungsflächen können dabei Neigungswinkel und Dicke sowie Querschnittsverlauf der Ansätze 21 und 22 entsprechend dimensioniert werden, um damit die Bewegung mehr oder weniger stark abzubremsen.

Insgesamt ergibt sich damit also eine Lagerung und Einspannung der Membranplatte 20, die einmal eine leichte Beweglichkeit der Platte 20 ermöglicht, die ein Klappern der Platte verhindert und die darüberhinaus ein mehr oder weniger stark progressives Anlegen der Platte ermöglicht. Durch Gestaltung und Verlauf der Ansätze 21 und 22 werden diese nur noch auf Biegung beansprucht, womit einmal ein besserer Toleranzausgleich möglich ist, d.h. Fertigungstoleranzen müssen nicht so extrem genau wie z.B. bei einem Druckfederelement eingehalten werden, andererseits tritt aber auch keine Beeinträchtigung der Lebensdauer wie beispielsweise bei einer auf Schub belasteten Einspannung auf.

In Figur 3 ist eine weitere Gestaltungsmöglichkeit einer solchen Membranplatte gezeigt. Die Membranplatte 25 weist dabei im an den Außenumfang angrenzenden Bereich eine ringplattenförmige Einlage 26 aus starrem Material auf, die auf Ober- und Unterseite und im offenen mittleren Bereich von elastomerem Material 27 umgeben ist, so daß hierbei die Membranplatte 25 im mittleren Bereich auch noch eine gewisse Nachgiebigkeit aufweist. Die schräg-radialen Ansätze 28 und 29 sind einstückig integral mit dem elastomeren Material 27 ausgebildet und ragen unmittelbar vom Randbereich der Membranplatte 25 ab. Damit ist ein gleiches Grundprinzip der Einspannung und Beweglichkeit der Membranplatte 25 wie bei der Membranplatte 20 nach Figur 2 gegeben.

Zusätzlich weist diese Membranplatte 25 als Anschlag in vertikaler Richtung auf Ober- und Unterseite je eine wulstförmige umlaufende Erhebung 30 und 31 auf, mit der der vertikale Freiweg zusätzlich zur progressiven Versteifung der Ansätze 28 und 29 begrenzt werden kann.

Statt einer solchen umlaufenden Erhebung können aber auch nur mindestens drei noppenförmige Erhebungen vorgesehen sein, wodurch ein noch weicheres Anschlagen möglich ist.

In Figur 4 ist eine weitere Ausgestaltung einer solchen Membranplatte 20 gezeigt, bei der sich die Platte 20 selbst radial nach außen bis in den Freiraum zwischen den Ansätzen 21 und 22 erstreckt. Damit bietet der nach außen überstehende Bereich der Platte 20 gleichzeitig einen Anschlag für die Ansätze 21 und 22 bei entsprechender Auslenkung der Membranplatte 25 nach oben oder unten.

In Fig. 5 ist eine weitere Ausgestaltung gezeigt, bei der die Ansätze 30 und 31 schräg-radial nach innen gerichtet sind. Hierbei ergibt sich gleichfalls eine flüssigkeitsdichte Einspannung sowie eine Funktion der Platte 20 selbst als Anschlag, wie das für die nach außen weisenden Ansätze 21 und 22 in Fig. 4 gilt.

Bei den dargestellen Ausführungsbeispielen sind die Ansätze 21, 22 bzw. 28, 29 und 30, 31 jeweils geschlossen umlaufend dargestellt. Es ist aber auch möglich, daß der obere Anschlag sich über jeweils nur einen Teilbereich oder mehrere einzelne Teilbereiche des Plattenumfanges entsprechend ausgebildet ist. Dadurch ist ein weicheres Anschlagen an die obere Kammerbegrenzung ermöglicht, wobei auch in Richtung von unten nach oben zur Arbeitskammer hin nur geringere Drücke auftreten.

Insgesamt ergibt sich also ein hydraulisch dämpfendes Zweikammer-Motorlager mit Entkopplung hochfrequenter Schwingungen, bei der die Membranplatte so gelagert und eingespannt ist, daß sie sich leicht bewegen kann, daß sie flüssigkeitsdicht ist, sich progressiv an ihre Begrenzungsflächen anlegt, nicht klappert, keine Lebensdauerprobleme auftreten und darüberhinaus ein einfacher Ausgleich relativ großer Toleranzen möglich ist.

## Patentansprüche

1. Hydraulisch dämpfendes Zweikammer-Motorlager, dessen mit Flüssigkeit gefüllte und gummielastische Umfangswände (5; 8) aufweisende Kammern (1; 2) über einen, in einer starren Zwischenplatte (3) angeordneten Kanal (4) miteinander in Verbindung stehen und in dessen Zwischenplatte (3) eine stirnseitig zumindest zentral offene Kammer (14) eingelassen ist, in der eine beiderseits von Flüssigkeit beaufschlagte und parallel zur Richtung eingeleiteter Schwingungen bewegliche Membranplatte (20) eingespannt ist, dadurch gekennzeichnet, daß die zumindest im radial außenliegenden Bereich starre Membranplatte (20; 25) einen geringeren Außendurchmesser als den Innendurchmesser der Membrankammer (14) aufweist und daß die Membranplatte (20; 25) am Außenumfang mit schräg nach oben und unten gerichteten ringförmigen Ansätzen (21, 22; 28, 29; 32, 33) aus gummielastischem Material versehen ist, über die die Membranplatte (20; 25) flüssigkeitsdicht und elastisch nachgiebig in der Membrankammer (14) eingespannt ist.

2. Zweikammer-Motorlager nach Anspruch 1, dadurch gekennzeichnet, daß die Ansätze (21, 22; 28, 29) schräg-radial nach außen gerichtet sind.

3. Zweikammer-Motorlager nach Anspruch 1, dadurch gekennzeichnet, daß die Ansätze (32, 33) schräg-radial nach innen gerichtet sind.

4. Zweikammer-Motorlager nach Anspruch 2 oder 3, dadurch gekennzeichnet, daß die Membranplatte (20) über ihren gesamten Durchmesser aus einem starren Material besteht und die schräg-radialen Ansätze (21, 22; 32, 33) einstückig in einem Vulkanisationsprozess an die Membranplatte (20) angeformt sind.

5. Zweikammer-Motorlager nach Anspruch 1, dadurch gekennzeichnet, daß die Membranplatte (25) aus gummielastischem Material mit einer ringplattenförmigen Einlage (26) aus starrem Material im an den Außenumfang angrenzenden Bereich besteht und die schräg-radialen Ansätze (28, 29) unmittelbar einstückig an das gummielastische Material (27) der Membranplatte (25) angeformt sind.

6. Zweikammer-Motorlager nach Anspruch 5, dadurch gekennzeichnet, daß die Membranplatte (25) radial innenliegend zu den schräg-radialen Ansätzen (28, 29) auf Ober- und Unterseite je eine wulstförmige, umlaufende Erhebung (30, 31) als Anschlag aufweist.

7. Zweikammer-Motorlager nach Anspruch 5, dadurch gekennzeichnet, daß die Membranplatte (20) radial innenliegend zu den schräg-radialen Ansätzen (28, 29) mindestens drei noppenförmige Erhebungen aufweist.

8. Zweikammer-Motorlager nach Anspruch 2, dadurch gekennzeichnet, daß sich die starre Membranplatte (20) radial bis in den Bereich zwischen den schrägradialen Ansätzen (21, 22) als Anschlagfläche erstreckt.

9. Zweikammer-Motorlager nach einem der Ansprüche 1 bis 5, dadurch gekennzeichnet, daß sich der schrägradiale Ansatz (21; 28; 32) auf der Oberseite der Membranplatte (20) nur über einen oder mehrere Teilbereiche des Membranplattenumfanges erstreckt.

10. Zweikammer-Motorlager nach einem oder mehreren der Ansprüche 1 bis 5, dadurch gekennzeichnet, daß Dicke und/oder Anstellwinkel der schräg-radialen Ansätze (21, 22; 28, 29; 32, 33) entsprechend der geforderten Progressivität der axialen Wegbegrenzung variierbar sind.

## Claims

1. Hydraulically damping, twin-chamber engine mounting, whose chambers (1; 2) filled with liquid and having rubber-elastic peripheral walls (5; 8) are connected to one another by a channel (4) disposed in a rigid intermediate plate (3) and which has, let into its intermediate plate (3), a frontally at least centrally open chamber (14) in which is clamped a diaphragm plate (20) acted upon at both sides by liquid and movable parallel to the direction of triggered vibrations, characterized in that the diaphragm plate (20; 25), which is rigid at least in the radially outerlying region, has a smaller external diameter than the internal diameter of the diaphragm chamber (14) and that the diaphragm plate (20; 25) is provided at the outer periphery with obliquely upward- and downward-directed, annular projections (21, 22; 28, 29; 32, 33) made of rubber-elastic material, by means of which the diaphragm plate (20; 25) is clamped in a liquid-tight and elastically yielding manner in the diaphragm chamber (14).

2. Twin-chamber engine mounting according to claim 1, characterized in that the projections (21, 22; 28, 29) are directed obliquely radially outwards.

3. Twin-chamber engine mounting according to claim 1, characterized in that the projections (32, 33) are directed obliquely radially inwards.

4. Twin-chamber engine mounting according to claim 2 or 3, characterized in that the diaphragm plate (20) over its entire diameter is made of a rigid material and the obliquely radial projections (21, 22; 32, 33) are integrally formed in a vulcanization process onto the diaphragm plate (20).

5. Twin-chamber engine mounting according to claim 1, characterized in that the diaphragm plate (25) is made of rubber-elastic material having an annular plate-shaped insert (26) made of rigid material in the region adjoining the outer periphery and the obliquely radial projections (28; 29) are directly formed integrally onto the rubber-elastic material (27) of the diaphragm plate (25).

6. Twin-chamber engine mounting according to claim 5, characterized in that the top and bottom surface of the diaphragm plate (25) has in each case a bead-like, circumferential raised portion (30, 31) lying radially inward from the obliquely radial projections (28, 29) as a stop.

7. Twin-chamber engine mounting according to claim 5, characterized in that the diaphragm plate (20) has at least three knob-like raised portions lying radially inward from the obliquely radial projections (28, 29).

8. Twin-chamber engine mounting according to claim 2, characterized in that the rigid diaphragm plate (20) extends as a stop face radially as far as into the region between the obliquely radial projections (21, 22).

9. Twin-chamber engine mounting according to one of claims 1 to 5, characterized in that the obliquely radial projection (21; 28; 32) on the top surface of the diaphragm plate (20) extends only over one or more subregions of the diaphragm plate periphery.

10. Twin-chamber engine mounting according to one or more of claims 1 to 5, characterized in that the thickness and/or angle of incidence of the obliquely radial projections (21, 22; 28, 29; 32, 33) are variable in accordance with the required progressive delimitation of axial displacement.

## Revendications

1. Support de moteur à deux chambres et à amortissement hydraulique, dont les chambres (1 ; 2), emplies de liquide et comportant des parois périphériques (5 ; 8) ayant l'élasticité du caoutchouc, communiquent entre elles par un canal (4) ménagé dans un plateau intermédiaire rigide (3); dans lequel une chambre (14) ouverte au moins au centre du côté frontal est ménagée dans le plateau intermédiaire (3), et une plaque de membrane (20) sollicitée des deux côtés par du liquide et mobile parallèlement à la direction d'oscillations provoquées est enserrée dans ladite chambre (14), caractérisé en ce que la plaque de membrane (20 ; 25), rigide au moins dans la région située radialement à l'extérieur, présente un diamètre extérieur plus faible que le diamètre intérieur de la chambre de membrane (14), et en ce que la plaque de membrane (20 ; 25) est pourvue à la périphérie extérieure de talons annulaires (21, 22 ; 28, 29 ; 32, 33) dirigés en oblique vers le haut et vers le bas et en matériau qui présente l'élasticité du caoutchouc, au moyen desquels la plaque de membrane (20 ; 25) est serrée de manière étanche aux liquides et capable de céder élastiquement dans la chambre de membrane (14).

2. Support de moteur à deux chambres selon la revendication 1, caractérisé en ce que les talons (21, 22 ; 28, 29) sont dirigés obliquement radialement vers l'extérieur.

3. Support de moteur à deux chambres selon la revendication 1, caractérisé en ce que les talons (32, 33) sont dirigés obliquement radialement vers l'intérieur.

4. Support de moteur à deux chambres selon l'une ou l'autre des revendications 2 et 3, caractérisé en ce que la plaque de membrane (20) est constituée sur la totalité de son diamètre en un matériau rigide, et en ce que les talons obliques radiaux (21, 22 ; 32, 33) sort formés d'une seule pièce en une opération de vulcanisation contre la plaque de membrane (20).

5. Support de moteur à deux chambres selon la revendication 1, caractérisé en ce que la plaque de membrane (25) est réalisée en matériau qui présente l'élasticité du caoutchouc, avec un insert (26) sous forme d'une plaque annulaire en matériau rigide dans la région limitrophe de la périphérie extérieure, et en ce que les talons obliques radiaux (28 ; 29) sont formés directement d'une seule pièce contre le matériau (27) de la plaque de membrane (25) qui présente l'élasticité du caoutchouc.

6. Support de moteur à deux chambres selon la revendication 5, caractérisé en ce que la plaque de membrane (25) présente en tant que butée des surélévations périphériques (30, 31) en forme de bourrelets situées radialement à l'intérieur des talons obliques radiaux (28, 29) sur la face supérieure et la face inférieure.

7. Support de moteur à deux chambres selon la revendication 5, caractérisé en ce que la plaque de membrane (20) comporte au moins trois surélévations en forme de boutons radialement à l'intérieur des talons obliques radiaux (28, 29).

8. Support de moteur à deux chambres selon la revendication 2, caractérisé en ce que la plaque de membrane rigide (20) s'étend radialement jusque dans la région entre les talons obliques radiaux (21, 22) en tant que surface de butée.

9. Support de moteur à deux chambres selon l'une quelconque des revendications 1 à 5, caractérisé en ce que le talon oblique radial (21 ; 28 ; 32) sur la face supérieure de la plaque de membrane (20) s'étend uniquement sur une ou plusieurs zones partielles de la périphérie de la plaque de membrane.

10. Support de moteur à deux chambres selon l'une ou plusieurs des revendications 1 à 5, caractérisé en ce que l'épaisseur et/ou l'angle des talons obliques radiaux (21, 22 ; 28, 29 ; 32, 33) sont variables en correspondance de la progressivité désirée pour la limitation de course axiale.
